# EUROPEAN PATENT APPLICATION

(11) **EP 4 727 233 A1**
(43) Date of publication of application: **15.04.2026**
(21) Application number: 24838551.0
(22) Date of filing: 20.06.2024
(51) Int. Cl.: H04W 72/0446

(54) **SAME-CHANNEL SIDELINK RESOURCE PREEMPTION METHOD, APPARATUS, AND STORAGE MEDIUM**

(30) Priority: 07.07.2023 CN 202310832320
(71) Applicant: CICT Connected and Intelligent Technologies Co., Ltd., Chongqing 400041 (CN)
(72) Inventor: LIU, Yanqiang, Chongqing 400041 (CN); ZHAO, Rui, Chongqing 400041 (CN); ZHENG, Shilei, Chongqing 400041 (CN); WANG, Yakun, Chongqing 400041 (CN)
(74) Representative: De Clercq & Partners
(86) International application number: PCT/CN2024/100300
(87) International publication number: WO 2025/011293

(57) **Abstract**

The present application provides a method and apparatus for preempting co-channel sidelink (SL) resources, and a storage medium. The method comprises: executing a resource allocation procedure according to first information of a first radio access module of a first terminal and second information of a second radio access module of a first terminal, and determining a first resource set; and preempting resources on the basis of the first resource set and a second resource set, the second resource set is determined according to resources currently occupied or granted for transmission of the first radio access module of the first terminal.

## Description

### Cross-Reference to Related Application

The present application claims the priority of Chinese patent application no. No.202310832320.2, filed in China on July 7, 2023, the disclosure of which is incorporated herein by reference in its entirety.

### Technical Field

The present application relates to the technical field of communications, and in particular, to a method and apparatus for preempting co-channel sidelink (SL) resources, and a storage medium.

### Background

In the related art, in Rel-16 New Radio (NR) SL, different reference signal receiving power (RSRP) thresholds are set on the basis of the transmitting and receiving priority. Different RSRP thresholds can affect the sensing results. NR SL high-priority packets to be transmitted may obtain more candidate resources, enabling implicit preemption. In addition, the Rel-16 NR SL related technologies also include a resource preemption mechanism, which further ensures the performance of high-priority NR SL transmissions between NR SL transmissions.

However, in scenarios where NR SL and Long Term Evolution (LTE) SL transmissions coexist on the same channel, it is necessary to ensure the transmission of high-priority services between LTE SL and NR SL, while also minimizing resource collisions between LTE SL and NR SL transmissions, so as to ensure the performance of both systems. Currently, there is no solution to this issue.

### Summary

Embodiments of the present application provide a method and apparatus for preempting co-channel SL resources, and a storage medium, so as to solve the technical problem of resource collisions between co-channel LTE SL and NR SL transmissions.

According to a first aspect, embodiments of the present application provide a method for preempting co-channel SL resources, which is applied to a first terminal. The method includes:
executing a resource allocation procedure according to first information of a first radio access module of a first terminal and second information of a second radio access module of the first terminal, and determining a first resource set; and
preempting resources on the basis of the first resource set and a second resource set, the second resource set is determined according to resources currently occupied or granted for transmission of the first radio access module of the first terminal.

According to a second aspect, embodiments of the present application provide a first terminal, including a memory, a transceiver, and a processor;
the memory is configured to store a computer program; the transceiver is configured to receive and transmit data under the control of the processor; the processor is configured to read the computer program in the memory and perform the following operations:
executing a resource allocation procedure according to first information of a first radio access module of a first terminal and second information of a second radio access module of the first terminal, and determining a first resource set; and
preempting resources on the basis of the first resource set and a second resource set, the second resource set is determined according to resources currently occupied or granted for transmission of the first radio access module of the first terminal.

According to a third aspect, embodiments of the present application provide an apparatus for preempting co-channel SL resources, including:
a determination module, configured to execute a resource allocation procedure according to first information of a first radio access module of a first terminal and second information of a second radio access module of the first terminal, and determine a first resource set; and
a preemption module, configured to preempt resources on the basis of the first resource set and a second resource set, the second resource set is determined according to resources currently occupied or granted for transmission of the first radio access module of the first terminal.

According to a fourth aspect, embodiments of the present application further provide a non-transitory readable storage medium, storing a computer program which is used for causing a processor to execute the method for preempting co-channel SL resources according to the first aspect.

According to a fifth aspect, embodiments of the present application further provide a processor readable storage medium, storing a computer program which is used for causing a processor to execute the method for preempting co-channel SL resources according to the first aspect.

According to a sixth aspect, embodiments of the present application further provide a computer readable storage medium, storing a computer program which is configured to cause a computer to execute the method for preempting co-channel SL resources according to the first aspect.

According to a seventh aspect, embodiments of the present application further provide a communication device, storing a computer program which is configured to cause the communication device to execute the method for preempting co-channel SL resources according to the first aspect.

According to an eighth aspect, embodiments of the present application further provide a chip product, storing a computer program which is configured to cause the chip product to execute the method for preempting co-channel SL resources according to the first aspect.

According to the method and apparatus for preempting co-channel SL resources, and the storage medium provided in the present application, for a co-channel SL scenario, first, a resource allocation procedure is performed on the basis of first information of a first radio access module and second information of a second radio access module of a first terminal, so as to determine a first resource set; then, resource preemption is performed on the basis of the first resource set and a second resource set which is determined by the resources currently occupied or granted by the first radio access module of the first terminal, which reduces resource collisions in the co-channel SL scenario and ensures the performance of the system.

### Brief Description of the Drawings

To describe the technical solutions in the embodiments of the present application or in related technologies more clearly, the following briefly describes the accompanying drawings required for describing the embodiments or related technologies. Apparently, the accompanying drawings in the following description show some embodiments of the present application, and a person of ordinary skill in the art may still derive other accompanying drawings from these accompanying drawings without creative efforts.
Fig. 1 is a schematic flowchart of a method for preempting co-channel SL resources according to embodiments of the present application;
Fig. 2 is a first schematic diagram of the principle for co-channel SL resource preemption according to embodiments of the present application;
Fig. 3 is a second schematic diagram of the principle for co-channel SL resource preemption according to embodiments of the present application;
Fig. 4 is a third schematic diagram of the principle for co-channel SL resource preemption according to embodiments of the present application;
Fig. 5 is a fourth schematic diagram of the principle for co-channel SL resource preemption according to embodiments of the present application;
Fig. 6 is a schematic structural diagram of a first terminal according to embodiments of the present application;
Fig. 7 is a schematic structural diagram of an apparatus for preempting co-channel SL resources according to embodiments of the present application.

### Detailed Description of the Embodiments

In Rel-18, three types of devices may be supported within the co-channel for service transmission:
Type A device, which includes both an LTE SL module and an NR SL module, wherein the LTE SL module can transmit shared information to the NR SL module by means of intra-device interaction;
Type B device, which includes only an NR SL module, or includes both an LTE SL module and an NR SL module, wherein the NR SL module cannot obtain shared information from the LTE SL module; and

Type C device, which includes only an LTE SL module.

It should be noted that the LTE SL module can perform LTE SL sensing, reception and transmission, and the NR SL module can perform NR SL sensing, reception, and transmission; the LTE SL module is unable to sense, receive, or transmit NR SL transmissions, the NR SL module is unable to sense, receive, or transmit LTE SL transmissions.

The resource preemption mechanism in Rel-16 only supports preemption between NR SLs, and the specific scheme is as follows:
a physical layer of a first terminal/ a first user equipment (UE) receives a group of resource sets provided by a higher layer, and defines the resource sets as a second resource set; the first UE executes a resource allocation procedure according to the information related to the NR SL module, to obtain a resource set S_{A} which is defined as a first resource set. If a target resource (the target resource can be any resource in the second resource set) in the second resource set meets the following condition, the physical layer of the first UE reports the target resource to the higher layer for preemption:
condition 1: the target resource is not in the resource set S_{A};
condition 2: the target resource located in a first resource pool, or a resource located in the first resource pool at a position that is j NR SL logical resource reservation periods of the first UE after the target resource, overlaps with a first resource;
wherein the first resource is a resource located in an NR SL resource pool at a position that is q NR SL logical resource reservation periods of the second UE after a resource which is sensed by the NR SL module of the first UE and occupied by the NR SL module of the second UE (another NR SL UE). The NR SL logical resource reservation period of the second UE corresponds to the resource reservation period of the resources occupied by the NR SL transmission of the second UE. An RSRP measurement value corresponding to the resource occupied by the NR SL transmission of the second UE is greater than an RSRP threshold, and the RSRP threshold is the final threshold reached after the initial threshold has been raised as necessary. j and q are both integers, and the value may be any value within a value range.

A priority value corresponding to the resources occupied by the NR SL transmission of the second UE meets at least one of the following conditions:
condition 1: the higher layer provides the parameter sl-PreemptionEnable, the parameter is set to "enable", and the priority value of the NR SL transmission of the first UE is greater than a priority value corresponding to the resources occupied by the NR SL transmission of the second UE;
condition 2: the higher layer provides a parameter sl-PreemptionEnable, the parameter is not set to "enable", the priority value of the NR SL transmission of the first UE is greater than a priority value corresponding to the resources occupied by the NR SL transmission of the second UE, and the priority value corresponding to the resources occupied by the NR SL transmission of the second UE is less than a priority threshold.

In Rel-16, the NR SL sets different RSRP thresholds on the basis of transmission and reception priorities to influence sensing results, so that a service packet to be transmitted with a high priority of NR SL may obtain more candidate resources, realizing implicit preemption. In addition, Rel-16 introduces a resource preemption mechanism to further ensure the performance of high-priority NR SL transmissions among NR SL transmissions. However, in scenarios where NR SL and LTE SL transmissions coexist on the co-channel, the related technology still needs further enhancement to ensure the transmission of high-priority services between LTE SL and NR SL, while minimizing resource collisions between LTE SL and NR SL transmissions to ensure the performance of both systems.

On the basis of the described technical problem, according to the method and apparatus for preempting co-channel SL resources, and the storage medium provided in the present application, for a co-channel SL scenario, first, a resource allocation procedure is performed on the basis of first information of a first radio access module and second information of a second radio access module of a first terminal, so as to determine a first resource set; then, resource preemption is performed on the basis of the first resource set and a second resource set which is determined according to the resources currently occupied or granted by the first radio access module of the first terminal, which reduces resource collisions in the co-channel SL scenario and ensures the performance of the system.

To make the objects, technical solutions, and advantages of the embodiments of the present disclosure clearer, hereinafter, the technical solutions in the embodiments of the present application will be described clearly and thoroughly with reference to the accompanying drawings of the embodiments of the present application. Obviously, the embodiments as described are some of the embodiments of the present application, and are not all of the embodiments of the present application. All other embodiments obtained by a person of ordinary skill in the art on the basis of the embodiments of the present application without any inventive effort shall all fall within the scope of protection of some embodiments of the present application.

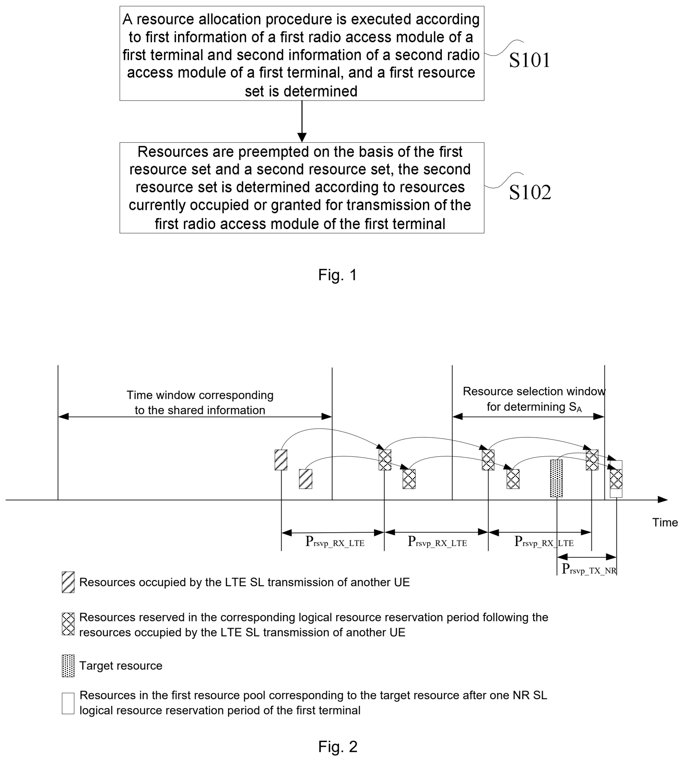

Fig. 1 is a schematic flowchart of a method for preempting co-channel SL resources according to embodiments of the present application. As shown in Fig. 1, the embodiment of the present application provides a method for preempting co-channel SL resources. An executive body of the method may be a first terminal, such as a mobile phone or a vehicle-mounted terminal. The method includes:
step 101: a resource allocation procedure is executed according to first information of a first radio access module of a first terminal and second information of a second radio access module of a first terminal, and a first resource set (S_{A}) is determined.

In some embodiments of the present disclosure, the first terminal may be a Type A device, and the first radio access module may be an NR SL module. The first information (the related information of the NR SL module) may include at least one of the following: the sensing information of the NR SL module (related information obtained by decoding the NR SL SCI of the NR SL transmission of other UEs) or the unmonitored slot information of the NR SL module.

The second radio access module may be an LTE SL module. The second information (shared information provided by the LTE SL module) may include at least one of the following:
LTE SL module sensing information: resources occupied by the LTE SL transmissions of other UEs obtained by decoding the received LTE SL SCI of LTE SL transmissions of other UEs (i.e., the resource blocks and sub-frames indicated by the LTE SL SCI of LTE SL transmissions of other UEs, including time-domain positions and frequency-domain positions), the corresponding priority values, the corresponding resource reservation period, and RSRP measurement values obtained by performing mesurement on the basis of the received LTE SL SCI of LTE SL transmissions of other UEs;
LTE SL module resource occupation information: resources occupied/granted by an LTE SL module of a first terminal in LTE SL transmission (including a time-domain position and a fr equency-domain position), the corresponding priority values, the corresponding resource reser vation periods, and corresponding value information (which may be an initial value and/or a current value) of sidelink resource re-selection counter (SL_RESOURCE_RESELECTION_CO UNTER);
unmonitored sub-frame information of the LTE SL module;
LTE SL resource pool related information, including an LTE SL resource pool period configuration (which may also be obtained by means of a network or intra-device interaction).

Step 102: resources are preempted on the basis of the first resource set and a second resource set, the second resource set is determined according to resources currently occupied or granted for transmission of the first radio access module of the first terminal.

The granted resources may refer to resources determined according to a selected link grant configured by the first radio access module of the first terminal.

In some embodiments, preempting resources on the basis of the first resource set and the second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a first resource;
the first resource is a resource located in the second resource pool at a position that is a first number of second logical resource reservation periods after the resource occupied by the second radio access module of the second terminal in the second resource pool.

The overlap comprises a time-domain overlap and a frequency-domain overlap.

The first resource pool may be an NR SL resource pool; j is an integer, and the value may be any value within a value range; the first logic resource reservation period may be an NR SL logic resource reservation period of a first radio access module NR SL module of the first terminal; the second resource pool may be an LTE resource pool; the second terminal may be a terminal including an LTE SL module, for example, a Type A device, or a Type B device, or a Type C device; the second radio access module may be an LTE SL module; the resources occupied by the second radio access module of the second terminal are resources that are in the second information (shared information provided by the LTE SL module): resources occupied by the LTE SL transmission of another UE obtained by the LTE SL module decoding the received LTE SL SCI of the LTE SL transmission of another UE; the value range of the first number is .[1,Q], wherein Q is determined on the basis of a resource selection window size during the execution of the resource allocation procedure, the LTE SL resource reservation period of the second UE, the time when the resource allocation procedure is triggered for execution, and the time when the LTE SL SCI of the LTE SL transmission from other UEs is received; "the first resource is a resource located in the second resource pool at a position that is a first number of second logical resource reservation periods after the resource occupied by the second radio access module of the second terminal in the second resource pool" may refer to the scenario where, if, in a subframe that a first number of second logical resource reservation periods after the time of receiving the LTE SL SCI of LTE SL transmissions from another UE, the LTE SL SCI of the LTE SL transmission from another UE is received again, then the first resources are the resources (i.e., the indicated resource blocks and sub-frames) indicated by this subsequently received LTE SL SCI. The second logic resource reservation period may be an LTE SL logic resource reservation period of the second terminal, and the LTE SL logical resource reservation period of the second terminal corresponds to the resource reservation period of the resources that are in the second information (shared information provided by the LTE SL module), that occupied by the LTE SL transmission of the second terminal obtained by decoding the received LTE SL SCI of LTE SL transmissions of another UE.

In some embodiments, an optional implementation for condition 2 can be based on the schematic diagram of the principle for co-channel SL resource preemption of Fig. 2. The subcarrier spacing (SCS) of the NR SL resource pool is 15 kHz (the resource granularity in time domain being 1 slot = 1 ms), and the SCS of the LTE SL resource pool is also 15 kHz (the resource granularity in time domain being 1 sub-frame = 1 ms). In cases where the resource at a position that is one NR SL logical resource reservation period of the first terminal after the target resource overlaps with a resource that is in the LTE SL resource pool and that is three logical resource reservation periods of the LTE SL transmission of another UE after the resource occupied by the LTE SL transmission of another UE, the physical layer of the NR SL module of the first terminal reports the target resource to the higher layer to perform preemption.

In some embodiments, the resources occupied by the second radio access module of the second terminal meet at least one of the following conditions:
condition 1: a reference signal receiving power (RSRP) measurement value corresponding to the resource occupied by the second radio access module of the second terminal is greater than a second RSRP threshold, and the second RSRP threshold is the final threshold reached by an initial threshold after executing the resource allocation procedure; and
condition 2: a priority value corresponding to the resource occupied by the second radio access module of the second terminal is less than a first priority value.

The Reference Signal Received Power (RSRP) measurement value of the resources occupied by the second radio access module of the second terminal can be an RSRP measurement value that is in the second information (the shared information from the LTE SL module), and obtained by performing measurement according to the received LTE SL SCI of the LTE SL transmission of another UE. The priority value corresponding to the resources occupied by the second radio access module of the second terminal can be the corresponding priority value that is in the second information (the shared information provided by the LTE SL module) and obtained by the LTE SL module decoding the LTE SL SCI of the LTE SL transmission of another UE.

In some embodiments of the present application, the conditions for preempting the target resource (i.e., the conditions met by the resources occupied by the second wireless access module of the second terminal) also include at least one of the following:
condition 1: a reference signal receiving power (RSRP) measurement value corresponding to the resource occupied by the second radio access module of the second terminal is greater than a second RSRP threshold, and the second RSRP threshold is the final threshold reached by an initial threshold after executing the resource allocation procedure; and
condition 2: a priority value corresponding to the resource occupied by the second radio access module of the second terminal is less than a first priority value.

The second terminal may be a terminal including an LTE SL module, for example, a Type A device, or a Type B device, or a Type C device; the second radio access module may be an LTE SL module; the first priority value may be determined according to an actual situation, may be configured in a predefined manner, may be configured by a higher-layer parameter, and may also be configured by a network device.

In some embodiments, preempting resources on the basis of the first resource set and the second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a second resource;
the second resource is a resource located in the second resource pool at a position that is a second number of third logical resource reservation periods after the resource composed of all sub-channels on the unmonitored sub-frame of the second radio access module of the first terminal; and

The overlap comprises a time-domain overlap and a frequency-domain overlap.

Condition 3: in the procedure of the first terminal determining the first resource set, when the target resource meets the condition 2, the first terminal performs a resource exclusion operation on the target resource, and the exclusion operation is not revoked.

The first resource pool may be an NR SL resource pool; j is an integer, and the value may be any value within a value range; the first logic resource reservation period may be an NR SL logic resource reservation period of a first radio access module NR SL module of the first terminal; the second resource pool may be an LTE resource pool; the second terminal may be a terminal including an LTE SL module, for example, a Type A device, or a Type B device, or a Type C device; the second radio access module may be an LTE SL module; the unmonitored sub-frame of the second radio access module of the first terminal may be determined according to the unmonitored sub-frame information of the LTE SL module in the second information (shared information provided by the LTE SL module); the value range of the second number is [1,Q], and Q is determined according to a resource selection window size when the resource allocation procedure is executed, any resource reservation period configured in an LTE SL resource pool, the time when the execution of the resource allocation procedure is triggered, and the time of an unmonitored sub-frame; "resources at a position that is a second number of third logical resource reservation periods after the resource composed of all sub-channels on the unmonitored sub-frame of the second radio access module of the first terminal" may refer to the scenario where, assuming that the LTE SL SCI of the LTE SL transmission from another UE is received on the unmonitored sub-frame, and the SCI indicates resources composed of all sub-channels in that unmonitored sub-frame, and further assuming that the same LTE SL SCI is received again after a first number of third logical resource reservation periods after the time of the unmonitored sub-frame, the second resource is the resource indicated by this subsequently received LTE SL SCI; the third logic resource reservation period may be a logic resource reservation period corresponding to any resource reservation period configured in the LTE SL resource pool; "the exclusion operation is not revoked' may refer to the scenario where, in the procedure of the first terminal determining the first resource set, the candidate resource set obtained after excluding the target resource is not initialized as the initial candidate resource set, the first resource set is finally obtained by the first terminal excluding candidate resources from the initial candidate resource set, and the candidate resource set is an intermediate-state resource set obtained by the first terminal excluding candidate resources from the initial candidate resource set.

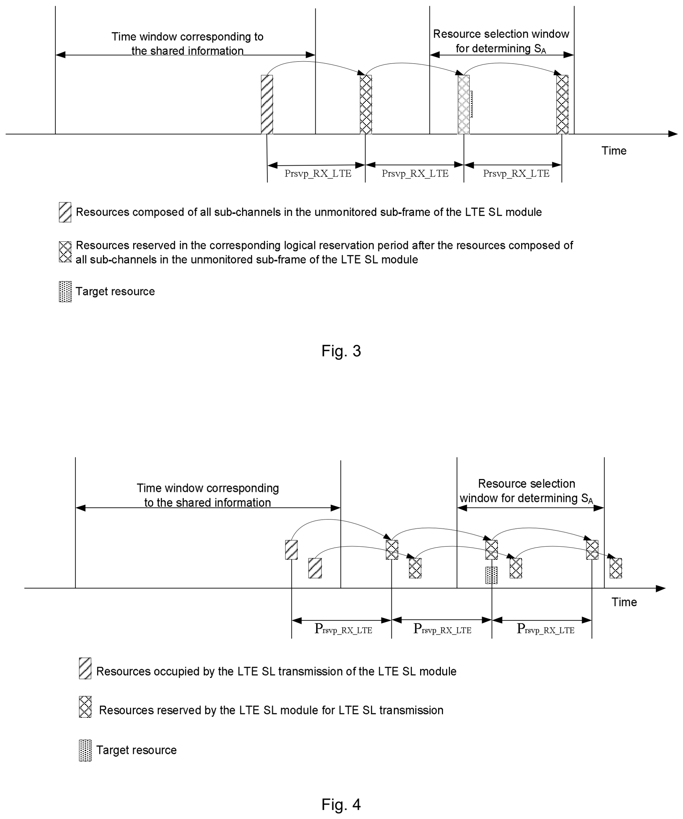

In some embodiments, an optional implementation for condition 2 can be based on the schematic diagram of the principle for co-channel SL resource preemption of Fig. 3. The SCS of the NR SL resource pool is 15 kHz (the resource granularity in time domain is 1 slot = 1 ms), and the SCS of the LTE SL resource pool is 15 kHz (the resource granularity in time domain is 1 sub-frame = 1 ms). In cases where the target resource overlaps with the resources in the LTE SL resource pool that are at a position of two third resource reservation periods after the resource composed of all sub-channels on the unmonitored sub-frames of the LTE SL module of the first terminal, the physical layer of the first terminal reports the target resource to a higher layer to execute preemption, and the third resource reservation period is any resource reservation period configured for the LTE SL resource pool.

In some embodiments, a transmission priority value of the first radio access module of the first terminal meets the following condition:
the transmission priority value of the first radio access module of the first terminal is greater than a second priority value.

In some embodiments of the present application, the conditions for performing preemption on the target resource (conditions met by the transmission priority value of the first radio access module of the first terminal) also include the following conditions:
the transmission priority value of the first radio access module of the first terminal is greater than a second priority value.

The first terminal may be a Type A device; the first radio access module may be an NR SL module; the second priority value may be determined according to an actual situation, may be configured in a predefined manner, may be configured by a higher-layer parameter, and may also be configured by a network device.

In some embodiments, preempting resources on the basis of the first resource set and the second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a third resource in time domain;
a transmission priority value of the first radio access module of the first terminal is greater than a transmission priority value of a second radio access module of the first terminal;
condition 3: the target resource located in a first resource pool, or a resource located in the first resource pool at a position that is j first logical resource reservation periods after the target resource, overlaps with a third resource in time domain;
the transmission priority value of the first radio access module of the first terminal is less than or equal to the transmission priority value of the second radio access module of the first terminal;
condition 4: in the procedure of the first terminal determining the first resource set, when the target resource meets the condition 2, or the target resource meets the condition 3, the first terminal performs a resource exclusion operation on the target resource, and the exclusion operation is not revoked,
wherein the third resource is a resource located in the second resource pool at a position that is a third number of fourth logical resource reservation periods after the resource occupied or granted by the second radio access module of the first terminal, or, the third resource is a resource granted by the second radio access module of the first terminal in the second resource pool.

The first resource pool may be an NR SL resource pool; j is an integer, and the value may be any value within a value range; the first logic resource reservation period may be an NR SL logic resource reservation period of a first radio access module of the first terminal; the first terminal may be a Type A device; the first radio access module may be an NR SL module; the second radio access module may be an LTE SL module; the second resource pool may be an LTE resource pool; the third number can be determined according to actual situations, and can be determined on the basis of the corresponding sidelink resource re-selection counter value in LTE SL module resource occupation information in the second information (shared information provided by the LTE SL module); it can be configured in a predefined manner, or can also be configured by a network device; the fourth logic resource reservation period may be a logic resource reservation period of an LTE SL module of the first terminal in the second information (shared information provided by the LTE SL module); the granted resource may refer to a resource determined according to a selected link grant configured by the second radio access module of the first terminal; "the exclusion operation is not revoked" may refer to the scenario where, in the procedure of the first terminal determining the first resource set, the candidate resource set obtained after excluding the target resource is not initialized as the initial candidate resource set, the first resource set is finally obtained by the first terminal excluding candidate resources from the initial candidate resource set, and the candidate resource set is an intermediate-state resource set obtained by the first terminal excluding candidate resources from the initial candidate resource set.

In some embodiments, an optional implementation for condition 2 can be based on the schematic diagram of the principle for co-channel SL resource preemption of Fig. 4. The SCS of the NR SL resource pool is 15 kHz (the resource granularity in time domain is 1 slot = 1 ms), and the SCS of the LTE SL resource pool is 15 kHz (the resource granularity in time domain is 1 sub-frame = 1 ms). In cases where the target resource overlaps in time domain with the resources reserved by the LTE SL module of the first terminal for LTE SL transmission, and where the transmission priority value of the first radio access module of the first terminal is greater than the transmission priority value of the second radio access module of the first terminal, the physical layer of the NR SL module of the first terminal reports the target resource to a higher layer to execute preemption.

In some embodiments, the transmission priority value of the second radio access module of the first terminal meets the following condition:
the transmission priority value of the second radio access module of the first terminal is less than a third priority value.

The transmission priority value of the second radio access module of the first terminal may be a resource reservation period that is in the second information (shared information provided by the LTE SL module) and corresponds to the resource occupied/granted by the LTE SL module of the first terminal for LTE SL transmission.

In some embodiments of the present application, the conditions for performing preemption on the target resource (conditions met by the transmission priority value of the second radio access module of the first terminal) also include the following conditions:
the transmission priority value of the second radio access module of the first terminal is less than a third priority value.

The first terminal may be a Type A device; the second radio access module may be an LTE SL module; the third priority value may be determined according to an actual situation, may be configured in a predefined manner, may be configured by a higher-layer parameter, and may also be configured by a network device.

In some embodiments, preempting resources on the basis of the first resource set and the second resource set includes:
in a case where any target resource in the second resource set meets at least one of the following conditions, preempting the target resource:
condition 1: a target resource is not in the first resource set; and
condition 2: a physical sidelink feedback channel (PSFCH) slot corresponding to the target resource in the first resource pool or a PSFCH slot corresponding to a resource located in the first resource pool at a position that is j first logical resource reservation periods after the target resource, overlaps with a sub-frame where the first resource is located;
the first resource is located in the second resource pool at a position that is a first number of second logical resource reservation periods after the resource occupied by the second radio access module of the second terminal in the second resource pool;
an RSRP measurement value corresponding to the resource occupied by the second radio access module of the second terminal is greater than a first RSRP threshold;
condition 3: in the procedure of the first terminal determining the first resource set, when the target resource meets the condition 2, the first terminal performs a resource exclusion operation on the target resource, and the exclusion operation is not revoked.

The first resource pool may be an NR SL resource pool; j is an integer, and the value may be any value within a value range; the first logic resource reservation period may be an NR SL logic resource reservation period of a first radio access module NR SL module of the first terminal; the second resource pool may be an LTE resource pool; the second terminal may be a terminal including an LTE SL module, for example, a Type A device, or a Type B device, or a Type C device; the second radio access module may be an LTE SL module; the resources occupied by the second radio access module of the second terminal are resources that are in the second information (shared information provided by the LTE SL module): resources occupied by the LTE SL transmission of another UE obtained by the LTE SL module decoding the received LTE SL SCI of the LTE SL transmission of another UE; the value range of the first number is[1,Q], wherein Q is determined on the basis of a resource selection window size during the execution of the resource allocation procedure, the LTE SL resource reservation period of the second UE, the time when the resource allocation procedure is triggered for execution, and the time when the LTE SL SCI of the LTE SL transmission from other UEs is received; "the first resource is located in the second resource pool at a position that is a first number of second logical resource reservation periods after the resource occupied by the second radio access module of the second terminal in the second resource pool" may refer to the scenario where, if, in a subframe that a first number of second logical resource reservation periods after the time of receiving the LTE SL SCI of LTE SL transmissions from another UE, the LTE SL SCI of the LTE SL transmission from another UE is received again, then the sub-frame where the first resources are located is the sub-frame (i.e., the sub-frame indicated by the LTE SL SCI) where the resources indicated by this subsequently received LTE SL SCI are located; the second logic resource reservation period may be an LTE SL logic resource reservation period of the second terminal, and the LTE SL logical resource reservation period of the second terminal corresponds to the resource reservation period of the resources that are in the second information (shared information provided by the LTE SL module), that occupied by the LTE SL transmission of the second terminal obtained by decoding the received LTE SL SCI of LTE SL transmissions of another UE. The Reference Signal Received Power (RSRP) measurement value of the resources occupied by the second radio access module of the second terminal can be an RSRP measurement value that is in the second information (the shared information from the LTE SL module), and obtained by measuring the received LTE SL SCI of the LTE SL transmission of another UE. The first RSRP threshold may be determined according to an actual situation, may be configured in a predefined manner, may be configured by a higher-layer parameter, and may also be configured by a network device.

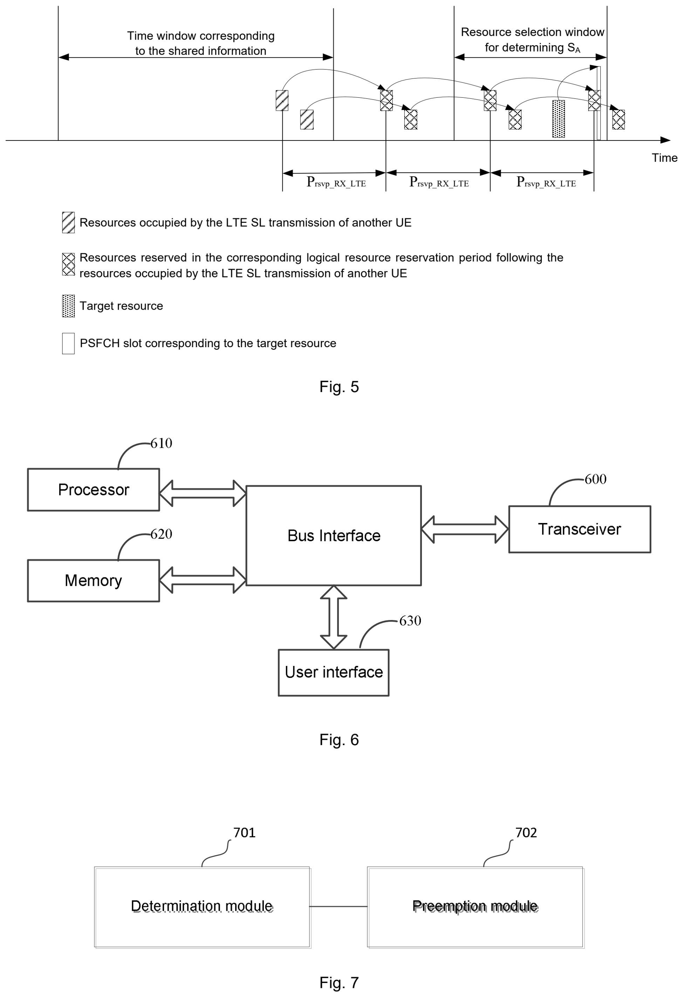

In some embodiments, an optional implementation for condition 2 can be based on the schematic diagram of the principle for co-channel SL resource preemption of Fig. 5. The SCS of the NR SL resource pool is 15 kHz (the resource granularity in time domain is 1 slot = 1 ms), and the SCS of the LTE SL resource pool is 15 kHz (the resource granularity in time domain is 1 sub-frame = 1 ms). In cases where the PSFCH slot corresponding to the target resource overlaps with the sub-frame of the resource that is in the LTE SL resource pool at a position of three logical resource reservation periods of the LTE SL transmission of another UE after the resource occupied by the LTE SL transmission of another UE, and in cases where an RSRP measurement value corresponding to the resource occupied by the second radio access module of the second terminal is greater than the first RSRP threshold, the physical layer of the NR SL module of the first terminal reports the target resource to a higher layer to execute preemption.

In some embodiments, a priority value corresponding to the resource occupied by the second radio access module of the second terminal meets the following condition:
the priority value corresponding to the resource occupied by the second radio access module of the second terminal is less than a fourth priority value.

In some embodiments of the present application, the conditions for performing preemption on the target resource (conditions met by the priority value corresponding to the resources occupied by the second radio access module of the second terminal) also include the following conditions:
the priority value corresponding to the resource occupied by the second radio access module of the second terminal is less than a fourth priority value.

The second terminal may be a terminal including an LTE SL module, for example, a Type A device, or a Type B device, or a Type C device; the second radio access module may be an LTE SL module; the fourth priority value may be determined according to an actual situation, may be configured in a predefined manner, may be configured by a higher-layer parameter, and may also be configured by a network device.

On the basis of the foregoing embodiments, in some embodiments, the condition met for preempting the target resource further comprises at least one of the following conditions:
condition 1: a first parameter is provided; and
condition 2: the first parameter is provided, and the value of the first parameter is a first value,
wherein the first parameter is used for instructing the first terminal to preempt resources according to the first resource set.

In some embodiments of the present application, a first parameter may also be configured to instruct to preempt the target resource.

The first parameter may be a parameter in the related art, such as sl-PreemptionEnable, or may be a newly added parameter.

For example, in cases where the first parameter is provided (whether or not the parameter value is empty), the first terminal determines that preemption can be performed on the target resource.

For another example, in cases where the first parameter is provided and the first parameter is set to "enable", the first terminal determines that preemption can be performed on the target resource.

On the basis of the foregoing embodiments, in some embodiments, the condition met for preempting the target resource further comprises at least one of the following conditions:
condition 1: a parameter is provided by the higher layer, and this parameter is set to "enable", and the priority value of the NR SL transmission of the first UE is greater than the priority value in the second information (shared information) corresponding to the resources occupied by the LTE SL transmission of another UE;
condition 2: a parameter is provided by the higher layer, and this parameter is not set to "enable"; the priority value of the NR SL transmission of the first UE is greater than the priority value in the shared information corresponding to the resources occupied by the LTE SL transmission of another UE; and the priority value in the shared information corresponding to the LTE SL transmission occupied by another UE is less than a priority threshold;
condition 3: a parameter is provided by the higher layer, this parameter is set to "enable", and/or the priority value in the shared information corresponding to the resources occupied by the LTE SL transmission of another UE is less than a priority threshold;
condition 4: a parameter is provided by the higher layer, this parameter is not set to "enable", and/or the priority value in the shared information corresponding to the resources occupied by the LTE SL transmission of another UE is less than a priority threshold;
the parameter may be a parameter in the related art, such as sl-PreemptionEnable, or may be a newly added parameter. A priority value in the shared information corresponding to the resource occupied for LTE-SL transmission of another UE may also be set to a certain priority value on the basis of configuration, for example, the priority value of the priority value is set to 1.

On the basis of the foregoing embodiments, in some embodiments, the condition met for preempting the target resource further comprises at least one of the following conditions:
condition 1: a parameter is provided by the higher layer, this parameter is set to "enable", and the priority value of the NR SL transmission of the first UE is greater than a priority threshold;
condition 2: a parameter is provided by the higher layer, this parameter is not set to "enable", and the priority value of the NR SL transmission of the first UE is greater than a priority threshold;
the parameter may be a parameter in the related art, such as sl-PreemptionEnable, or may be a newly added parameter.

On the basis of the foregoing embodiments, in some embodiments, the condition met for preempting the target resource further comprises at least one of the following conditions:
condition 1: a parameter is provided by the higher layer, this parameter is set to "enable", and the priority value of the NR SL transmission of the first UE is greater than the priority value in the second information (shared information) corresponding to the LTE SL transmission of the LTE SL module;
condition 2: a parameter is provided by the higher layer, and this parameter is not set to "enable"; the priority value of the NR SL transmission of the first UE is greater than the priority value in the shared information corresponding to the LTE SL transmission of the LTE SL module; and the priority value of the LTE SL transmission of the LTE SL module is less than a priority threshold;
condition 3: a parameter is provided by the higher layer, this parameter is set to "enable", and the priority value corresponding to the LTE SL transmission of the LTE SL module is less than a priority threshold, or the priority value of the NR SL transmission of the first UE is greater than a priority threshold;
condition 4: a parameter is provided by the higher layer, this parameter is not set to "enable," and the priority value corresponding to the LTE SL transmission of the LTE SL module is less than a priority threshold, or the priority value of the NR SL transmission of the first UE is greater than a priority threshold;
the parameter may be a parameter in the related art, such as sl-PreemptionEnable, or may be a newly added parameter. The priority value in the shared information corresponding to the LTE SL transmission of the LTE SL module can also be set to a certain priority value on the basis of configurations, for example, the priority value is set to 1.

According to the method for preempting o-channel SL resources provided in the present application, for a co-channel SL scenario, first, a resource allocation procedure is performed on the basis of first information of a first radio access module and second information of a second radio access module of a first terminal, so as to determine a first resource set; then, resource preemption is performed on the basis of the first resource set and a second resource set which is determined by the resources currently occupied or granted by the first radio access module of the first terminal, which reduces resource collisions in the same-channel SL scenario and ensures the performance of the system.

In addition, when the physical layer of the NR SL module of the first terminal executes the resource allocation procedure according to the shared information of the LTE SL module and the related information of the NR SL module, the NR SL module needs to send shared information request signaling to the LTE SL module in advance.

For example, the NR SL module of the first terminal sends the shared information request signaling to the LTE SL module at second time or before the second time, the request signaling including information of first time or information of a sub-frame where the first time is located.

In some embodiments, for example, before determining the first resource set, the LTE SL module of the first terminal needs to obtain the information of the first time or the information of the sub-frame where the first time is located.

The first time refers to the time when the first terminal executes the resource allocation procedure according to the shared information of the LTE SL module and the related information of the NR SL module.

The second time can be equal to the first time minus the first time interval, wherein the first time interval is 4ms plus the second time interval, and the second time interval is less than or equal to 4ms.

It should be noted that, the method regarding "when the physical layer of the NR SL module of the first terminal executes the resource allocation procedure according to the shared information of the LTE SL module and the related information of the NR SL module, the NR SL module needs to send shared information request signaling to the LTE SL module in advance" in the present application can be applied not only to the co-channel SL resource preemption but also to other scenarios, such as co-channel SL resource re-evaluation, which involve the physical layer of the NR SL module of the first terminal executing the resource allocation procedure on the basis of the shared information of the LTE SL module and the related information of the NR SL module.

Fig. 6 is a schematic structural diagram of a first terminal according to embodiments of the present application. As shown in Fig. 6, the first terminal includes a memory 620, a transceiver 600, and a processor 610, wherein:
The memory 620 is configured to store a computer program, the transceiver 600 is configured to receive and transmit data under the control of the processor 610; the processor 610 is configured to read the computer program in the memory 620 and perform the following operations:
executing a resource allocation procedures according to first information of a first radio access module of a first terminal and second information of a second radio access module of a first terminal, and determining a first resource set; and
preempting resources on the basis of the first resource set and a second resource set, the second resource set is determined according to resources currently occupied or granted for transmission of the first radio access module of the first terminal.

In Fig. 6, the bus architecture may include any number of buses and bridges connected to each other, and is specifically linked by various circuits of one or more processors represented by the processor 610 and a memory represented by the memory 620. The bus architecture may further link various other circuits such as a peripheral device, a voltage regulator, and a power management circuit together. These are all well-known in the art, and therefore are not further described in the present specification. The bus interface provides an interface. The transceiver 600 may be a plurality of elements, that is, include a transmitter and a receiver, and provide a unit for communicating with various other apparatuses on transmission media, including wireless channels, wired channels, optical fibers, etc. For different user equipment, the user interface 630 may be an interface for externally and internally connecting a required device. The connected device includes, but is not limited to a keypad, a display, a speaker, a microphone, a joystick, or the like.

The processor 610 is responsible for managing the bus architecture and common processing, and the memory 620 may store data used when the processor 610 performs an operation.

In some embodiments, the processor 610 may be a central processing unit (CPU), an application specific integrated circuit (ASIC), a field-programmable gate array (FPGA), or a complex programmable logic device (CPLD), and the processor may also use a multi-core architecture.

The processor, by invoking a computer program stored in the memory, is configured to execute any method provided in the embodiments of the present application according to the obtained executable instruction. The processor and memory may also be physically separate.

In some embodiments, preempting resources on the basis of the first resource set and a second resource set includes:
In a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps witha first resource;
the first resource is a resource located in the second resource pool at a position that is a first number of second logical resource reservation periods after the resource occupied by the second radio access module of the second terminal in the second resource pool.

In some embodiments, the resources occupied by the second radio access module of the second terminal meet at least one of the following conditions:
condition 1: a reference signal receiving power (RSRP) measurement value corresponding to the resource occupied by the second radio access module of the second terminal is greater than a second RSRP threshold, and the second RSRP threshold is the final threshold reached by an initial threshold after executing the resource allocation procedure; and
condition 2: a priority value corresponding to the resource occupied by the second radio access module of the second terminal is less than a first priority value.

In some embodiments, preempting resources on the basis of the first resource set and a second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a second resource;
the second resource is a resource located in the second resource pool at a position that is a second number of third logical resource reservation periods after the resource composed of all sub-channels on the unmonitored sub-frame of the second radio access module of the first terminal;
condition 3: in the procedure of the first terminal determining the first resource set, when the target resource meets the condition 2, the first terminal performs a resource exclusion operation on the target resource, and the exclusion operation is not revoked.

**In** some embodiments, a transmission priority value of the first radio access module of the first terminal meets the following condition:
the transmission priority value of the first radio access module of the first terminal is greater than a second priority value.

**In** some embodiments, preempting resources on the basis of the first resource set and a second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a third resource in time domain;
a transmission priority value of the first radio access module of the first terminal is greater than a transmission priority value of a second radio access module of the first terminal;
condition 3: the target resource located in a first resource pool, or a resource located in the first resource pool at a position that is j first logical resource reservation periods after the target resource, overlaps with a third resource in time domain;
the transmission priority value of the first radio access module of the first terminal is less than or equal to the transmission priority value of the second radio access module of the first terminal;
condition 4: in the procedure of the first terminal determining the first resource set, when the target resource meets the condition 2, or the target resource meets the condition 3, the first terminal performs a resource exclusion operation on the target resource, and the exclusion operation is not revoked,
wherein the third resource is a resource located in the second resource pool at a position that is a third number of fourth logical resource reservation periods after the resource occupied or granted by the second radio access module of the first terminal, or, the third resource is granted by the second radio access module of the first terminal in the second resource pool.

In some embodiments, the transmission priority value of the second radio access module of the first terminal meets the following condition:
the transmission priority value of the second radio access module of the first terminal is less than a third priority value.

In some embodiments, preempting resources on the basis of the first resource set and the second resource set includes:
in a case where any target resource in the second resource set meets at least one of the following conditions, preempting the target resource:
condition 1: a target resource is not in the first resource set; and
condition 2: a physical sidelink feedback channel (PSFCH) slot corresponding to the target resource in the first resource pool or a PSFCH slot corresponding to a resource located in the first resource pool at a position that is j first logical resource reservation periods after the target resource, overlaps with a sub-frame where the first resource is located;
the first resource is located in the second resource pool at a position that is a first number of second logical resource reservation periods after the resource occupied by the second radio access module of the second terminal in the second resource pool;
an RSRP measurement value corresponding to the resource occupied by the second radio access module of the second terminal is greater than a first RSRP threshold;
condition 3: in the procedure of the first terminal determining the first resource set, when the target resource meets the condition 2, the first terminal performs a resource exclusion operation on the target resource, and the exclusion operation is not revoked.

In some embodiments, a priority value corresponding to the resource occupied by the second radio access module of the second terminal meets the following condition:
the priority value corresponding to the resource occupied by the second radio access module of the second terminal is less than a fourth priority value.

In some embodiments, the conditions met for preempting the target resource further comprise at least one of the following conditions:
condition 1: a first parameter is provided; and
condition 2: the first parameter is provided, and the value of the first parameter is a first value,
wherein the first parameter is used for instructing the first terminal to preempt resources according to the first resource set.

It should be noted herein that, the first terminal provided in some embodiments of the present application can implement all method steps implemented by the method embodiment of which the execution subject is the first terminal, and can achieve the same technical effect. The parts and beneficial effects of the embodiments that are the same as the method embodiments will no longer be described in detail.

Fig. 7 is a schematic structural diagram of an apparatus for preempting co-channel SL resources according to some embodiments of the present application. As shown in Fig. 7, the embodiments of the present application provide an apparatus for preempting co-channel SL resources, comprising a determination module 701 and a preemption module 702, wherein
the determination module 701 is configured to execute a resource allocation procedure according to first information of a first radio access module of a first terminal and second information of a second radio access module of a first terminal, and determine a first resource set; and the preemption module 702 is configured to preempt resources on the basis of the first resource set and a second resource set, the second resource set is determined according to resources currently occupied or granted for transmission of the first radio access module of the first terminal.

In some embodiments, preempting resources on the basis of the first resource set and a second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a first resource;
the first resource is a resource located in the second resource pool at a position that is a first number of second logical resource reservation periods after the resource occupied by the second radio access module of the second terminal in the second resource pool.

In some embodiments, the resources occupied by the second radio access module of the second terminal meet at least one of the following conditions:
condition 1: a reference signal receiving power (RSRP) measurement value corresponding to the resource occupied by the second radio access module of the second terminal is greater than a second RSRP threshold, and the second RSRP threshold is the final threshold reached by an initial threshold after executing the resource allocation procedure; and
condition 2: a priority value corresponding to the resource occupied by the second radio access module of the second terminal is less than a first priority value.

In some embodiments, preempting resources on the basis of the first resource set and a second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a second resource;
the second resource is a resource located in the second resource pool at a position that is a second number of third logical resource reservation periods after the resource composed of all sub-channels on the unmonitored sub-frame of the second radio access module of the first terminal; and
condition 3: in the procedure of the first terminal determining the first resource set, when the target resource meets the condition 2, the first terminal performs a resource exclusion operation on the target resource, and the exclusion operation is not revoked.

In some embodiments, a transmission priority value of the first radio access module of the first terminal meets the following condition:
the transmission priority value of the first radio access module of the first terminal is greater than a second priority value.

In some embodiments, preempting resources on the basis of the first resource set and a second resource set includes:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a third resource in time domain;
a transmission priority value of the first radio access module of the first terminal is greater than a transmission priority value of a second radio access module of the first terminal;
condition 3: the target resource located in a first resource pool, or a resource located in the first resource pool at a position that is j first logical resource reservation periods after the target resource, overlaps with a third resource in time domain;
the transmission priority value of the first radio access module of the first terminal is less than or equal to the transmission priority value of the second radio access module of the first terminal;
condition 4: in the procedure of the first terminal determining the first resource set, when the target resource meets the condition 2, or the target resource meets the condition 3, the first terminal performs a resource exclusion operation on the target resource, and the exclusion operation is not revoked,
wherein the third resource is a resource located in the second resource pool at a position that is a third number of fourth logical resource reservation periods after the resource occupied or granted by the second radio access module of the first terminal, or, the third resource is granted by the second radio access module of the first terminal in the second resource pool.

**In** some embodiments, the transmission priority value of the second radio access module of the first terminal meets the following condition:
the transmission priority value of the second radio access module of the first terminal is less than a third priority value.

**In** some embodiments, preempting resources on the basis of the first resource set and a second resource set includes:
in a case where any target resource in the second resource set meets at least one of the following conditions, preempting the target resource:
condition 1: a target resource is not in the first resource set; and
condition 2: a physical sidelink feedback channel (PSFCH) slot corresponding to the target resource in the first resource pool or a PSFCH slot corresponding to a resource located in the first resource pool at a position that is j first logical resource reservation periods after the target resource, overlaps with a sub-frame where the first resource is located;
the first resource is located in the second resource pool at a position that is a first number of second logical resource reservation periods after the resource occupied by the second radio access module of the second terminal in the second resource pool;
an RSRP measurement value corresponding to the resource occupied by the second radio access module of the second terminal is greater than a first RSRP threshold;
condition 3: in the procedure of the first terminal determining the first resource set, when the target resource meets the condition 2, the first terminal performs a resource exclusion operation on the target resource, and the exclusion operation is not revoked.

In some embodiments, a priority value corresponding to the resource occupied by the second radio access module of the second terminal meets the following condition:
the priority value corresponding to the resource occupied by the second radio access module of the second terminal is less than a fourth priority value.

In some embodiments, the conditions met for preempting the target resource further comprise at least one of the following conditions:
condition 1: a first parameter is provided; and
condition 2: the first parameter is provided, and the value of the first parameter is a first value,
wherein the first parameter is used for instructing the first terminal to preempt resources according to the first resource set.

In some embodiments, the apparatus for preempting co-channel SL resources provided in the embodiment of the present application can implement all method steps implemented by the method embodiment of which the execution subject is the first terminal, and can achieve the same technical effect. The parts and beneficial effects of the embodiments that are the same as the method embodiments will no longer be described in detail.

It should be noted that the classification of the units/modules in the embodiments of the present application is schematic and is only a logical function division, and other division modes may also be implemented in practice. In addition, functional units in the embodiments of the present disclosure may be integrated into one processing unit, or the units may exist alone physically, or two or more units are integrated into one unit. The integrated unit may be implemented in the form of hardware, and may also be implemented in the form of a software functional unit.

If the integrated unit is implemented in the form of a software functional unit and is sold or used as an independent product, the integrated unit can be stored in a processor-readable storage medium. On the basis of such understanding, the part of the technical solutions of some embodiments of the present disclosure that contributes in essence or to the related art or all or part of the technical solutions may be embodied in the form of a software product stored in a storage medium. Several instructions are included in the storage medium to cause a computer device (which may be a personal computer, server or network device, etc.) or a processor to execute all or some of the steps of the methods of various embodiments of the present disclosure. The storage medium above includes: any medium that can store program codes, such as a USB flash disk, a removable hard disk, a read-only memory (ROM), a random access memory (RAM), a magnetic disk, or an optical disk.

In some embodiments, further provided is a non-transitory readable storage medium, storing a computer program, which is used for a processor to execute the method for preempting co-channel SL resources provided in the foregoing method embodiments.

In some embodiments, the non-transitory readable storage medium provided in the embodiments of the present application can implement all method steps implemented in the foregoing method embodiments, and can achieve the same technical effects. The parts and beneficial effects of the embodiments that are the same as the method embodiments will no longer be described in detail.

It should be noted that the non-transitory readable storage medium can be any available medium or data storage device that the processor can access, including but not limited to magnetic storage devices (such as floppy disks, hard drives, magnetic tapes, magneto-optical disks (MO), etc.), optical storage devices (such as compact discs (CD), digital versatile discs (DVD), blu-ray discs (BD), high-definition versatile discs (HVD), etc.), and semiconductor storage devices (such as ROM, erasable programmable read-only memory (EPROM), electrically erasable programmable read-only memory (EEPROM), non-volatile memory (NAND FLASH), solid state disks (SSD), etc.).

In some embodiments, further provided is a processor readable storage medium, storing a computer program which is used for causing a processor to execute the method for preempting co-channel SL resources provided in the foregoing method embodiments.

In some embodiments, the processor-readable storage medium provided in the embodiments of the present application can implement all method steps implemented in the foregoing method embodiments, and can achieve the same technical effects. The parts and beneficial effects of the embodiments that are the same as the method embodiments will no longer be described in detail.

In some embodiments, further provided is a computer readable storage medium, storing a computer program which is used for causing a computer to execute the method for preempting co-channel SL resources provided in the foregoing method embodiments.

In some embodiments, the computer readable storage medium provided in the embodiments of the present application can implement all method steps implemented in the foregoing method embodiments, and can achieve the same technical effects. The parts and beneficial effects of the embodiments that are the same as the method embodiments will no longer be described in detail.

In some embodiments, further provided is a communication device, storing a computer program which is used for causing the communication device to execute the method for preempting co-channel SL resources provided in the foregoing method embodiments.

In some embodiments, the communication device provided in the embodiments of the present application can implement all method steps implemented in the foregoing method embodiments, and can achieve the same technical effects. The parts and beneficial effects of the embodiments that are the same as the method embodiments will no longer be described in detail.

In some embodiments, further provided is a chip product, storing a computer program which is used for causing the chip product to execute the method for preempting co-channel SL resources provided in the foregoing method embodiments.

In some embodiments, the chip product provided in the embodiments of the present application can implement all method steps implemented in the foregoing method embodiments, and can achieve the same technical effects. The parts and beneficial effects of the embodiments that are the same as the method embodiments will no longer be described in detail.

In addition, it should be noted that, in the embodiments of the present application, that terms "first", "second" and the like are used for distinguishing similar objects rather than describing a specific sequence or a precedence order. It should be understood that terms used in such a way are interchangeable under proper conditions, so that the embodiments of the present application can be implemented in an order different from the order shown or described herein. In addition, "first" and "second" are usually used to distinguish objects of a same type, and do not restrict a quantity of objects. For example, there may be one or a plurality of first objects.

The term "and/or" in the embodiments of the present application in the embodiments of the present application, that terms "first", "second" and the like are used for distinguishing similar objects rather than describing a specific sequence or a precedence order. The character "/" generally indicates an "or" relationship between the associated objects.

"Determining B based on A" in the present application means that the factor A should be considered when B is determined. It is not limited to "determining B based on A alone", but also includes "determining B based on A and C", "determining B based on A, C and E", "determining C based on A, and further determining B based on C", etc. In addition, it may also include using A as a condition for determining B, for example, "when A meets a first condition, determining B using the first method", and for another example, "when A meets a second condition, determining B", etc. For still another example, "when A meets a third condition, determining B based on the first parameter" and so on. It may also be that A is used as a condition for determining a factor of B, for example, "when A meets the first condition, determining C using the first method, and further determining B based on C" and so on.

The term "a plurality of" in the embodiments of the present application refers to two or more, and other quantifiers are similar thereto.

The technical solutions provided in the embodiments of the present application may be applicable to various systems, especially to a 5th Generation Mobile Communication Technology (5G) system. For example, a suitable system may be a global system of mobile communications (GSM) system or a code division multiple access (CDMA) system, a wideband code division multiple access (WCDMA) general packet radio service, (GPRS) system, a long term evolution (LTE) system, an LTE frequency division duplex (FDD) system, an LTE time division duplex (TDD) system, and a long term evolution advanced (LTE-A) system, a universal mobile telecommunication system (UMTS), a worldwide interoperability for microwave access (WiMAX) system, a 5G new radio interface (NR) system, etc. Each of the multiple systems includes a terminal device and a network device. The system can further include a core network portion, such as an evolved packet system (EPS) and a 5G system (5GS).

The terminal device involved in the embodiment of the present application may be a device for providing voice and/or data connectivity for a user, a handheld device with a wireless connection function or other processing devices connected to a wireless modem. In different systems, the names of terminal devices may also be different, for example, in a 5G system, a terminal device may be referred to as a user equipment (UE). The wireless terminal may communicate with one or more core networks by means of a radio access network (RAN). The wireless terminal may be a mobile terminal, such as a mobile phone (or referred to as a "cellular" phone) or a computer with a mobile terminal. For example, the computer with a mobile terminal may be a portable, pocket-sized, handheld, computer built-in, or in-vehicle mobile apparatus, which exchanges voice and/or data with the radio access network. For example, the wireless terminal may be a device such as a personal communication service (PCS) phone, a cordless phone, a session initiation protocol (SIP) phone, a wireless local loop (WLL) station, or a personal digital assistant (PDA) . The wireless terminal may also be referred to as a system, a subscriber unit, a subscriber station, a mobile station, a mobile, a remote station, an access point, a remote terminal, an access terminal, a user terminal, a user agent, a user device, user equipment, or the like, which is not limited in the embodiments of the present application.

The network devices involved in the embodiments of the present application may be base stations, and the base stations may include cells. Depending on specific application scenarios, the base stations may also be called access points, or may refer to devices that communicate with the wireless terminal devices by means of one or more sectors on an air interface in the access network, or other names. The network devices may be used to convert received air frames and internet protocol (IP) packets to each other, as routers between the wireless terminal devices and the rest of the access network. The rest of the access network may include an IP communication network. The network devices may also coordinate attribute management of the air interface. For example, the network device involved in the embodiment of the present disclosure may be network devices (base transceiver stations (BTSs)) in the global system for mobile communications (GSM) or code division multiple access (CDMA), network devices (NodeB) in the wide-band code division multiple access (WCDMA), evolved network devices (evolutional Node B, eNB or e-NodeB) in the long term evolution (LTE) system or 5G base stations (gNB) in the 5G network architecture (next generation system), or may be home evolved node B (HeNB), relay nodes, femto, pico or the like, which is not limited in the embodiments of the present application. In some network structures, the network device may include centralized unit (CU) nodes and distributed unit (DU) nodes, and the centralized units and the distributed units may be geographically separated from each other.

The network devices and the terminal devices may each use one or more antennas for multi-input multi-output (MIMO) transmission. The MIMO transmission may be single user MIMO (SU-MIMO) or multiple user MIMO (MU-MIMO). According to the form and number of antenna combinations, the MIMO transmission may be a 2Dimission MIMO (2D MIMO), a 3Dimission MIMO (3D MIMO), a Full Dimension MIMO antenna (FD-MIMO), or a massive MIMO antenna (massive-MIMO), and may also be diversity transmission, recoding transmission, beamforming transmission or the like.

As will be appreciated by a person skilled in the art, embodiments of the present disclosure may be provided as a method, a system, or a computer program product. Therefore, the present disclosure may take the form of entirely hardware embodiments, entirely software embodiments or embodiments combining software and hardware. Furthermore, the present disclosure may take the form of a computer program product implemented on one or more computer-usable storage media (including but not limited to a disk memory, an optical memory, etc.) containing computer-usable program codes.

Some embodiments of the present disclosure are described with reference to the flowcharts and/or block diagrams of the method, device (system), and computer program product according to the embodiments of the present disclosure. It should be understood that computer executable instructions may be used to implement each process and/or block in the flowchart and/or block diagram and a combination of processes and/or blocks in the flowchart and/or the block diagram. These computer executable instructions may be provided to a processor of a general-purpose computer, a special-purpose computer, an embedded processor or other programmable data processing devices to produce a machine, such that an apparatus for implementing functions specified in one or more processes in the flowchart and/or one or more blocks in the block diagram is implemented by executing the instructions by the processor of the computer or other programmable data processing devices.

These processor executable instructions can also be stored in a processor-readable memory that can direct a computer or other programmable data processing devices to operate in a particular manner, such that the instructions stored in the processor-readable memory produce a product comprising an instruction device, the instruction device implementing functions specified in one or more processes of the flowchart and/or one or more blocks of the block diagram.

These processor executable instructions may also be loaded onto a computer or other programmable data processing devices, so that a series of operation steps are executed on the computer or other programmable data processing devices to generate processing implemented by the computer, so that the instructions executed on the computer or other programmable data processing devices provide steps for implementing functions specified in one or more processes in the flowchart and/or one or more blocks in the block diagram.

Obviously, a person skilled in the art can make various modifications and variations to the present application without departing from the spirit and scope of the present application. The present application is intended to cover these modifications and variations provided that they fall within the scope of protection defined by the claims and their equivalent technologies of the present application.

## Claims

1. A method for preempting co-channel sidelink (SL) resources, applied to a first terminal, the method comprising:
executing a resource allocation procedure according to first information of a first radio access module of a first terminal and second information of a second radio access module of a first terminal, and determining a first resource set; and
preempting resources on the basis of the first resource set and a second resource set, the second resource set is determined according to resources currently occupied or granted for transmission of the first radio access module of the first terminal.

2. The method for preempting co-channel SL resources as claimed in claim 1, wherein preempting resources on the basis of the first resource set and the second resource set comprises:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a first resource;
the first resource is a resource located in the second resource pool at a position that is a first number of second logical resource reservation periods after the resource occupied by the second radio access module of the second terminal in the second resource pool.

3. The method for preempting co-channel SL resources as claimed in claim 2, wherein resources occupied by the second radio access module of the second terminal meet at least one of the following conditions:
condition 1: a reference signal receiving power (RSRP) measurement value corresponding to the resource occupied by the second radio access module of the second terminal is greater than a second RSRP threshold, and the second RSRP threshold is the final threshold reached by an initial threshold after executing the resource allocation procedure; and
condition 2: a priority value corresponding to the resource occupied by the second radio access module of the second terminal is less than a first priority value.

4. The method for preempting co-channel SL resources as claimed in claim 1, wherein preempting resources on the basis of the first resource set and the second resource set comprises:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a second resource;
the second resource is a resource located in the second resource pool at a position that is a second number of third logical resource reservation periods after the resource composed of all sub-channels on the unmonitored sub-frame of the second radio access module of the first terminal; and
condition 3: in the procedure of the first terminal determining the first resource set, when the target resource meets the condition 2, the first terminal performs a resource exclusion operation on the target resource, and the exclusion operation is not revoked.

5. The method for preempting co-channel SL resources as claimed in claim 4, wherein a transmission priority value of the first radio access module of the first terminal meets the following condition:
the transmission priority value of the first radio access module of the first terminal is greater than a second priority value.

6. The method for preempting co-channel SL resources as claimed in claim 1, wherein preempting resources on the basis of the first resource set and the second resource set comprises:
in a case where any target resource in the second resource set meets at least one of the following conditions, preempting the target resource:
condition 1: a target resource is not in the first resource set; and
condition 2: the target resource located in a first resource pool, or a resource located in the first resource pool at a position that is j first logical resource reservation periods after the target resource, overlaps with a third resource in time domain;
a transmission priority value of the first radio access module of the first terminal is greater than a transmission priority value of a second radio access module of the first terminal;
condition 3: the target resource located in a first resource pool, or a resource located in the first resource pool at a position that is j first logical resource reservation periods after the target resource, overlaps with the third resource in time domain;
the transmission priority value of the first radio access module of the first terminal is less than or equal to the transmission priority value of the second radio access module of the first terminal;
condition 4: in the procedure of the first terminal determining the first resource set, when the target resource meets the condition 2, or the target resource meets the condition 3, the first terminal performs a resource exclusion operation on the target resource, and the exclusion operation is not revoked,
wherein the third resource is a resource located in the second resource pool at a position that is a third number of fourth logical resource reservation periods after the resource occupied or granted by the second radio access module of the first terminal, or, the third resource is a resource grantedby the second radio access module of the first terminal in the second resource pool.

7. The method for preempting co-channel SL resources as claimed in claim 6, wherein the transmission priority value of the second radio access module of the first terminal meets the following condition:
the transmission priority value of the second radio access module of the first terminal is less than a third priority value.

8. The method for preempting co-channel SL resources as claimed in claim 1, wherein preempting resources on the basis of the first resource set and the second resource set comprises:
in a case where any target resource in the second resource set meets at least one of the following conditions, preempting the target resource:
condition 1: a target resource is not in the first resource set; and
condition 2: a physical sidelink feedback channel (PSFCH) slot corresponding to the target resource in the first resource pool or a PSFCH slot corresponding to a resource located in the first resource pool at a position that is j first logical resource reservation periods after the target resource, overlaps with a sub-frame where a first resource is located;
the first resource is located in the second resource pool at a position that is a first number of second logical resource reservation periods after the resource occupied by the second radio access module of the second terminal in the second resource pool;
an RSRP measurement value corresponding to the resource occupied by the second radio access module of the second terminal is greater than a first RSRP threshold;
condition 3: in the procedure of the first terminal determining the first resource set, when the target resource meets the condition 2, the first terminal performs a resource exclusion operation on the target resource, and the exclusion operation is not revoked.

9. The method for preempting co-channel SL resources as claimed in claim 8, wherein a priority value corresponding to the resource occupied by the second radio access module of the second terminal meets the following condition:
the priority value corresponding to the resource occupied by the second radio access module of the second terminal is less than a fourth priority value.

10. The method for preempting co-channel SL resources as claimed in any one of claims 2 to 9, wherein the condition met for preempting the target resource further comprises at least one of the following conditions:
condition 1: a first parameter is provided; and
condition 2: the first parameter is provided, and the value of the first parameter is a first value,
wherein the first parameter is used for instructing the first terminal to preempt resources according to the first resource set.

11. A first terminal, comprising a memory, a transceiver and a processor;
the memory is configured to store a computer program; the transceiver is configured to receive and transmit data under the control of the processor; the processor is configured to read the computer program in the memory and execute the method for preempting co-channel SL resources as claimed in any one of claims 1 to 10.

12. An apparatus for preempting co-channel SL resources, comprising:
a determination module, configured to execute a resource allocation procedure according to first information of a first radio access module of a first terminal and second information of a second radio access module of a first terminal, and determine a first resource set; and
a preemption module configured to preempt resources on the basis of the first resource set and a second resource set, the second resource set is determined according to resources currently occupied or granted for transmission of the first radio access module of the first terminal.

13. A non-transitory readable storage medium, storing a computer program, which is used for a processor to execute the method for preempting co-channel SL resources as claimed in any one of claims 1 to 10.
